# EUROPÄISCHE PATENTSCHRIFT

(11) **EP 0 804 882 B1**
(45) Veröffentlichungstag und Bekanntmachung des Hinweises auf die Patenterteilung: **14.11.2001**
(21) Anmeldenummer: 97106442.3
(22) Anmeldetag: 18.04.1997
(51) Int. Cl.: A23G 1/18, A23G 3/22, A23G 3/24

(54) **Kombinierte Temperier- und Überziehmaschine für kakaobutterhaltige oder ähnliche fetthaltige Massen**
Tempering-coating combined machine for cocoa-butter or like fat containing masses
Enrobeuse-conditionneuse combinée pour masse contenant du beurre de cacao ou des graisses analogues

(30) Priorität: 04.05.1996 DE 19618001
(43) Veröffentlichungstag der Anmeldung: 05.11.1997
(73) Patentinhaber: Sollich KG, 32105 Bad Salzuflen (DE)
(72) Erfinder: Sollich, Helmut, 24407 Rabenkirchen (DE)
(74) Vertreter: Patentanwälte Rehberg + Hüppe

(56) Entgegenhaltungen:
- DE-A- 3 044 655
- DE-B- 1 273 312

## Beschreibung

Die Erfindung betrifft eine kombinierte Temperier- und Überziehmaschine für kakaobutterhaltige oder ähnliche fetthaltige Massen, mit einer Temperierstation, einer insbesondere darüber angeordneten Überziehstation, einem durch die Überziehstation geführten Gitterband zur Aufnahme der Warenstücke, einer unter dem Gitterband angeordneten Wanne zum Auffangen und Zuleiten überschüssiger Masse zu der Temperierstation und mit mindestens einer Förderstrecke für die flüssige Masse. Die Erfindung läßt sich insbesondere bei solchen Maschinen anwenden, die für eine vergleichsweise kleine Leistung ausgelegt und bestimmt sind und bei denen die Überziehstation unmittelbar oberhalb der Temperierstation angeordnet ist. Die Erfindung läßt sich aber auch dann wenden, wenn die Temperierstation neben der Überziehstation aufgestellt oder angeordnet wird und der Rücklauf der überschüssigen Masse zu der Temperierstation über entsprechende Verbindungsleitungen erfolgt.

In einer Temperierstation wird die zu temperierende kakaobutterhaltige oder ähnliche fetthaltige Masse durch einen Abkühlvorgang mit nachfolgendem Erwärmungsvorgang in einen solchen verarbeitungsfähigen Zustand überführt, daß sie mit Hilfe der Überziehstation, die in der Regel mindestens einen Schleierkasten für die Ausbildung eines Überziehvorhanges sowie ein Gebläse zum Entfernen überschüssiger Masse von den Süßwarenstücken aufweist, problemlos verarbeitet werden kann. Es versteht sich, daß immer mit Masseüberschuß gearbeitet wird, wobei die von den Warenstücken nicht aufgenommene Masse auf irgendeine Weise in einen Rücklauf gerät, von dem zumindest ein Teil wiederum durch die Temperierstation geführt wird, um die genau eingestellten Temperierbedingungen der Masse in der Überziehstation dauerhaft und verläßlich aufrechtzuerhalten. Oft werden bei einer solchen kombinierten Maschine zwei Kreisläufe für die temperierte flüssige Masse aufrechterhalten. Ein erster Kreislauf führt durch die Temperiermaschine und durch ein Reservoir für temperierte Masse. Ein zweiter Kreislauf, in welchem ein vergleichsweise größerer Massenstrom bewegt wird, führt von dem Reservoir zu der Überziehstation bzw. zu dem Schleierkasten.

Eine kombinierte Temperier- und Überziehmaschine der eingangs beschriebenen Art für kakaobutterhaltige oder ähnliche fetthaltige Massen ist aus der DE-B-12 73 312 bekannt. Die Maschine weist eine Temperierstation, eine darüber angeordnete Überziehstation, ein durch die Überziehstation geführtes Gitterband zur Aufnahme der Warenstücke auf. Unter dem Gitterband befindet sich eine Wanne zum Auffangen und Zuleiten überschüssiger Masse zu der Temperierstation. Es ist mindestens eine nach oben geführte Förderstrecke für die flüssige Masse vorgesehen.

Aus der DE-A-30 44 655 ist eine Vorrichtung zum Reinigen und hydraulischen Sprühen von Schokolademasse bekannt, bei dem dem Spritzapparat eine temperierte Schokolademasse zugeführt wird, deren Korngrößenspektrum mit hoher Wahrscheinlichkeit zu einem Verstopfen der Sprühdüsenöffnung führt. Um die Funktionssicherheit der Sprühvorrichtung zu erhöhen und ein sicheres Abschalten des Grobkorns aus der zu versprühenden Schokolademasse zu ermöglichen, ist ein Schwingsieb mit einem darunter angeordneten, als Wägegefäß ausgebildeten Vorratsbehälter vorgesehen. Das Schwingsieb weist einen Siebeinsatz auf. Bei einer eintretenden Verstopfung wird über einen erfassten Druckanstieg auf einen zweiten hydraulischen Spritzapparat umgeschaltet.

Kombinierte Temperier- und Überziehmaschinen der in Rede stehenden Art sind bekannt. Die Temperierstation ist dabei vorteilhaft mit einer relativ kleinen Leistung ausgelegt, um den apparativen Aufwand niedrig zu halten. Die zu behandelnden Warenstücke, beispielsweise Schokoladeriegel, Pralinen, Eiscreme-Stücke, Kekse, Kuchenstücke o. dgl. können während ihrer Herstellung, sei es in vorangehenden Stationen, sei es in entsprechend kombinierten Überziehstationen mit zusätzlichem Streugut behandelt werden, bei dem die Gefahr besteht, daß es sich von den Warenstücken löst und insbesondere durch den Überziehvorgang in den Kreislauf der flüssigen Masse gelangt. So können die Warenstücke beispielsweise Produkteinlagen aufweisen, insbesondere Fruchtstücke, Waffelstücke o. dgl.. Auch aufgebrachtes Streugut, wie Nußstücke, Getreideflocken o. dgl. können sich während des Überziehvorganges von den Warenstücken lösen und in den Kreislauf für die flüssige Masse gelangen. Auch Bestandteile der Warenstücke selbst können sich von diesen lösen und durch das Gitterband hindurchtreten, um dann in den Kreislauf für die flüssige Masse zu gelangen. Die auf kleine Leistung ausgelegte Temperierstation besitzt in aller Regel Verengungsstellen, also Stellen mit geringer Spaltweite, die in der Weise anfällig sind, daß die Gefahr besteht, daß sich solche Produkt- oder Auflagenbestandteile an den Verengungsstellen absetzen, wodurch die Förderung und/oder Wirkungsweise der Temperierstation stark eingeschränkt werden kann. Dies kann so weit gehen, daß die ohnehin auf kleine Leistung ausgelegte Temperierstation nicht mehr in der Lage ist, den gewünschten Temperiergrad der zu verarbeitenden Masse im Bereich der Überziehstation aufrechtzuerhalten. Wenn die Temperierung der Masse nicht stimmt, entsteht ein Produkt mit unzureichenden qualitativen Eigenschaften, welches nicht mehr verkaufsfähig ist.

Der Erfindung liegt die Aufgabe zugrunde, an einer kombinierten Temperier- und Überziehmaschine sicherzustellen, daß die Temperierung der in der Überziehstation zu verarbeitenden Masse dauerhaft und verläßlich eingehalten wird.

Erfindungsgemäß wird dies bei der kombinierten Temperier- und Überziehmaschine dadurch erreicht, daß unterhalb des Gitterbandes ein auch während der Produktion aus der Maschine herausnehmbares Sieb vorgesehen ist, welches so angeordnet ist, daß die zur Temperierstation zurückfließende Masse durch das Sieb geleitet wird.

Die Erfindung geht von dem Gedanken aus, die Temperierstation von dem Zutritt von Stücken, die von den Warenstücken abgebrochen sind und/oder von entsprechendem Streu- oder Einlagengut, welches eine bestimmte Größenordnung übersteigt, freizuhalten. Diese Stücke sollen mit dem Sieb jedoch nicht nur aufgefangen werden, sondern es soll auch die Möglichkeit bestehen, diese Stücke mit Hilfe des herausnehmbaren Siebes aus dem Massefluß zu entfernen, sei es in regelmäßigen Zyklen, sei es am Ende eines entsprechenden Produktionsabschnittes. Teile, die geringere Abmessungen als die Maschenweite des Siebes aufweisen, können ohne Nachteil im Kreislauf verbleiben, etwa bis sie sich aneinander anlagern und dann gemeinsam eine solche Größenordnung erreichen, daß ihre Abschneidung an dem Sieb erfolgt. Das Sieb selbst ist in aller Regel als platten- oder kastenartiger Körper ausgebildet, so daß es die für die Handhabung erforderliche Stabilität aufweist. Es besitzt eine solche Größe, daß es in der Lage ist, die erfahrungsgemäß zu erwartende Menge an Stücken und Fremdkörpern aufzunehmen und von dem Durchtritt in die Temperierstation abzuhalten.

Das herausnehmbare Sieb kann im Bereich der Wanne angeordnet sein. In der Regel befindet sich bei einer solchen kombinierten Maschine unterhalb des Gitterbandes und unterhalb eines Reservoirs für temperierte Masse eine Wanne, die meist schräggestellte Seitenwandungen besitzt, um die von ihr aufgefangene Masse bzw. Massen zusammenzuführen und dem Eingang der Temperierstation zuzuleiten. Das herausnehmbare Sieb kann im Bereich dieser Wanne angeordnet sein bzw. auch einen Bestandteil der Wanne bilden. Das Sieb erstreckt sich im wesentlichen in horizontaler Richtung und nimmt so für seine Anordnung nur wenig Platz ein.

Das Sieb kann aus einem Lochblech bestehen. Insbesondere aber kann das herausnehmbare Sieb ein Stück Siebgewebe aufweisen, welches Maschen mit einer Öffnungsweite von etwa 1,5 bis 3 mm besitzt. Das Sieb ist dabei aus Drahtgewebe hergestellt.

Unter dem Gitterband kann ein einen Überlauf aufweisendes Reservoir für temperierte Masse vorgesehen sein, wobei das herausnehmbare Sieb so angeordnet ist, daß es sowohl die aus dem Überlauf des Reservoirs austretende Masse als auch die von dem Reservoir nicht aufgefangene Masse der Überziehstation auffängt. Das herausnehmbare Sieb besitzt damit eine entsprechende Größe, die nicht nur darauf abgestimmt ist, die beiden beschriebenen Teilströme an flüssiger Masse aufzunehmen, sondern andererseits auch die Gewähr dafür bietet, daß Bereiche des Siebes durch aufgefangene Stücke in ihrem Durchgang versperrt werden und Nachbarbereiche bereitstehen, um den Durchfluß der Masse zuzulassen. Dabei ist es insbesondere sinnvoll, wenn das herausnehmbare Sieb kastenförmig mit umlaufender hochgezogener Seitenwandung ausgebildet ist. Dies erbringt die Möglichkeit, daß sich die auf das Sieb gelangende Masse in gewissem Maße ausbreiten kann, so daß einerseits nicht die Gefahr besteht, daß die Masse mit den Stücken seitlich übertritt, sondern die gesamte durchgehende Masse auch dann verläßlich gesiebt wird, wenn bereits eine gewisse Anzahl bzw. Menge von Stücken und Fremdkörpern auf dem Sieb abgelagert sind.

Das herausnehmbare Sieb kann eine großflächige Durchbrechung mit hochgezogenem Rand aufweisen. Dieser hochgezogene Rand besitzt in vertikaler Richtung eine geringere Erstreckung als die hochgezogene Seitenwandung, so daß insoweit ein Notüberlauf gebildet wird. Wenn das Sieb mit seiner Siebfläche durch aufgefangene Stücke verstopft ist und eine Reinigung des Siebes aus Versehen unterblieben ist, kann dennoch Masse durch das Sieb hindurchtreten und zur Temperierstation gelangen, wobei dann aber der Nachteil besteht, daß auch von den Warenstücken losgelöste Stücke mit in den Bereich der Temperierstation gelangen können. Immerhin wird aber dabei auch der notwendige Temperiergrad der Masse aufrechterhalten.

In einer besonderen Ausführungsform kann das herausnehmbare Sieb an der Maschine schwingfähig gelagert und als Schwingsieb mit einem Schwingantrieb versehen sein. Ein solcher Schwingantrieb erfordert zwar einen etwas höheren Aufwand, stellt aber andererseits sicher, daß die von dem Sieb aufgefangene flüssige Masse schneller das Sieb durchfließen kann, ohne den Notüberlauf benutzen zu müssen.

Die Erfindung wird anhand eines bevorzugten Ausführungsbeispiels weiter erläutert und beschrieben. Es zeigen:
- Fig. 1: eine schematisierte Seitenansicht, teilweise geschnitten, einer bevorzugten Ausführungsform der kombinierten Temperier- und Überziehmaschine,
- Fig. 2: eine vergrößerte Darstellung aus dem Mittelbereich der Maschine nach Fig. 1,
- Fig. 3: eine Stirnansicht der Maschine gemäß Fig. 1 mit eingesetztem Sieb und
- Fig. 4: eine Stirnansicht der Maschine gemäß Fig. 1 mit herausgezogenem Sieb.

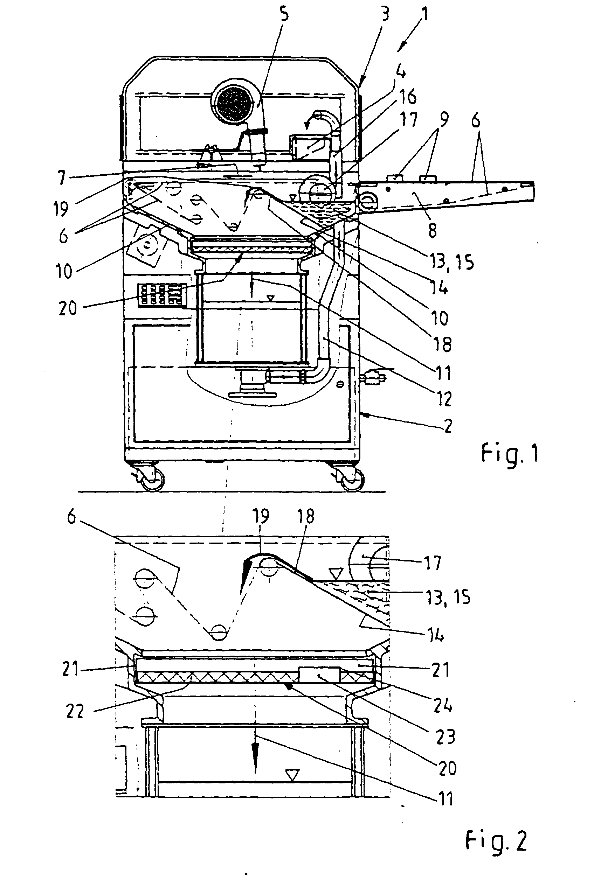

Die in Fig. 1 dargestellte kombinierte Temperier- und Überziehmaschine 1 umfaßt im wesentlichen zwei Stationen, nämlich eine um unteren Bereich angeordnete Temperierstation 2 und eine im oberen Bereich angeordnete Überziehstation. Die Überziehstation 3 weist in aller Regel einen Schleierkasten 4 zur Ausbildung eines von oben nach unten herabfließenden Überziehvorhanges aus flüssiger, temperierter Masse auf. Auch ein Gebläse 5 zum Abblasen überschüssiger flüssiger Masse von den überzogenen Warenstücken gehört zu der Maschine 1.

Unterhalb der Überziehstation 3 ist ein gestrichelt dargestelltes Gitterband 6, welches auch abschnittweise in Teilbänder unterteilt sein kann, als Endlosband vorgesehen und durch die Maschine in Förderrichtung gemäß Pfeil 7 um zahlreiche Umlenk- und Spannrollen geführt ist. In der Regel ist im Bereich einer Konsole 8 ein solches Teilband angeordnet, auf welchem warenstücke 9, die überzogen werden sollen, ausgerichtet abgelegt und durch die Maschine 1 hindurchgefördert werden, wobei sie am Eingang in die Überziehstation auf das andere Teilband des Gitterbandes 6 aufgebracht bzw. übergeben werden.

Unterhalb des Gitterbandes 6, also des Bandes, welches mit der flüssigen Masse in Verbindung kommt, ist eine wanne 10 angeordnet, die in der Regel auch schräggestellte Seitenwände umfaßt und die durch das Gitterband 6 hindurchtretende flüssige Masse auffängt, zusammenführt und dafür sorgt, daß diese Masse gemäß Pfeil 11 dem Eingang der Temperierstation 2 zugeleitet wird. Die Temperierstation 2 ist hier nur schematisch angedeutet. Sie ist in bekannter Weise ausgebildet und kann z. B. eine Förder- und Temperierschnecke beinhalten, der ein entsprechender Kühlkreislauf zugeordnet ist, um die flüssige Schokolade zunächst abzukühlen und dann wieder zu erwärmen und so den erforderlichen Temperiergrad der zu verarbeitenden Masse einzustellen bzw. zu erreichen. Vom Ausgang der Temperierstation 2 führt eine erste Förderstrecke 12 von der Temperierstation 2 nach oben in ein Reservoir 13 für temperierte Masse, welches eine ebenfalls wannenförmige Wandung 14 aufweist. In dem Reservoir 13, welches sich unterhalb des Gitterbandes 6 und über die Arbeitsbreite reichend erstreckt, befindet sich eine relativ große Menge temperierter, flüssiger Masse 15. Die Wandung 14 des Reservoirs 13 ist so ausgebildet und relativ zu dem Schleierkasten 4 der Überziehstation 3 angeordnet, daß ein Großteil der durch den Schleierkasten 4 strömenden Masse auch wiederum von dem Reservoir 13 aufgefangen wird, während ein anderer Teil dieser Masse von der Wanne 10 aufgefangen wird. Es ist eine zweite Förderstrecke 16 vorgesehen, deren Pumpe 17 zur Verdeutlichung einmal dargestellt ist. Mit dieser Förderstrecke 16 wird temperierte Masse aus dem Reservoir 13 angesaugt und dem Schleierkasten 4 zugeführt. Die im Bereich dieser Förderstrecke 16 umgewälzte Masse stellt eine größere Menge dar, als sie durch die erste Förderstrecke 12 bewegt wird. Diese vergrößerte Menge bzw. dieser vergrößerte Mengenstrom ist erforderlich, um den Überziehvorhang an dem Schleierkasten 4 ordnungsgemäß auszubilden und das zu überziehende Warenstück 9 vollständig und sicher zu überziehen. Der durch die erste Förderstrecke 12 bewegte Massenstrom ist vergleichsweise geringer und dient dazu, den Temperiergrad der Masse in dem Reservoir 13 dauerhaft aufrechtzuerhalten. An der Wandung 14 des Reservoirs 13 ist seitlich ein Überlauf 18 gemäß Pfeil 19 gebildet, über den Masse überströmen kann und ebenfalls der Temperierstation 2 zugeführt wird. Dies ist insbesondere dann der Fall, wenn die Maschine 1 angefahren wird, also stationäre Verhältnisse mit dem erforderlichen Temperiergrad der Masse 15 eingestellt wird, noch bevor Warenstücke 9 durch die Maschine 1 geführt werden und/oder das Gitterband 6 in Umlauf gesetzt wird.

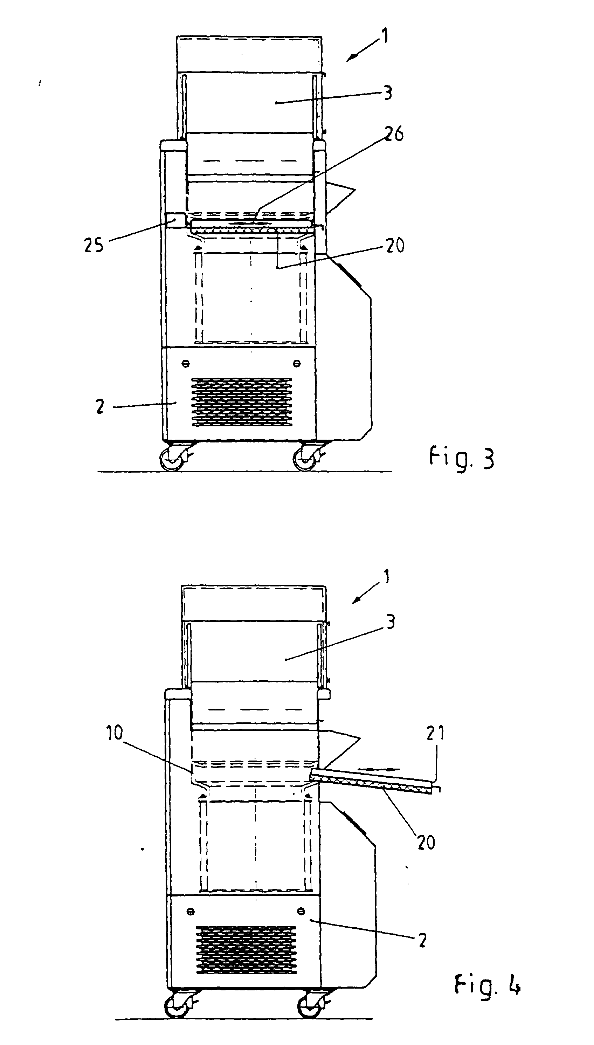

Zwischen der Überziehstation 3 und der Temperierstation 2 ist ein herausnehmbares Sieb 20 vorgesehen, welches als platten- oder kastenförmiges Sieb mit umlaufender, hochgezogener Seitenwandung 21 und einer Siebfläche 22 ausgebildet ist, die horizontal angeordnet ist (Fig. 2). Die Siebfläche 22 wird insbesondere von einem Siebgewebe gebildet, welches je nach Anwendungsfall verschiedene Maschenweite aufweisen kann. Das Sieb 20 ist so angeordnet, daß es einerseits in Verbindung mit der wanne 10 all jene flüssige Masse auffangen kann, die durch das Gitterband 6 durch die Maschine 1 geschleppt wird, von dem Gitterband 6 abtropft und nicht von der Wandung 14 des Reservoirs 13 aufgefangen wird. Das Sieb 20 ist aber auch so angeordnet, daß es den Teilmengenstrom an flüssiger Masse aufnimmt, der am Überlauf 18 gemäß Pfeil 19 aus dem Reservoir 13 übertritt. Diese beiden Teilmengenströme müssen das Sieb 20 durchdringen, so daß die flüssige Masse hier gesiebt wird und abgebrochene Warenteile, Streugut, Fremdkörper u. dgl. von dem Sieb 20 aufgefangen und auf dessen Oberfläche abgelagert werden, so daß nur gesiebte Masse der Temperierstation 2 zugeleitet wird. Damit werden solche Teile von der Temperierstation 2 ferngehalten. Die Temperierstation 2 kann ordnungsgemäß und dauerhaft ihre Funktion erfüllen, so daß der erforderliche Temperiergrad der Masse 15 im Reservoir 13 dauerhaft und verläßlich eingehalten wird. Selbstverständlich ist es je nach Anwendungsfall erforderlich, das Sieb 20 aus seiner ordnungsgemäßen Funktionslage (Fig. 3) herauszunehmen, wie dies in einer Zwischenstellung in Fig. 4 angedeutet ist. Die aufgefangenen Fremdkörper, Streugut u. dgl. kann dann entfernt, das Sieb 20 wieder eingeschoben und der Produktionsprozeß fortgesetzt werden.

Das Sieb 20, welches in Fig. 2 vergrößert dargestellt ist, kann eine großflächige Durchbrechung 23 aufweisen, die von einem hochgezogenen Rand 24 umgeben ist. Die vertikale Erstreckung des Randes 24 ist geringer als die vertikale Erstreckung der Seitenwandung 21 des Siebes 20. Die Durchbrechung 23 ist so angeordnet, daß sie außerhalb des Bereiches liegt, in welchem üblicherweise flüssige Masse auf das Sieb trifft. Erst dann, wenn das Sieb 20 zu einem gewissen Grade verstopft bzw. zugesetzt ist und eine Säuberung aus irgendwelchen Gründen unterbleibt, hat die Masse Gelegenheit, über den Rand 24 der Durchbrechung 23 hinüber gleichsam im Sinne eines Notüberlaufes durch das Sieb 20 hindurchzutreten und in den Bereich der Temperierstation 2 zu gelangen.

Fig. 3 zeigt in schematischer Weise einen Schwingantrieb 25 für das Sieb 20, welches in diesem Falle schwingfähig gemäß Doppelpfeil 26 gelagert ist. Durch diese Schwingungsanregung wird erreicht, daß die flüssige Masse das Sieb 20 vergleichsweise schneller passiert. Auch eine gewisse Ausbreitwirkung wird damit auf die Masse ausgeübt.

Fig. 4 verdeutlicht die Möglichkeit, das Sieb 20 manuell aus der Maschine 1 herauszunehmen. Dies geschieht in einer Richtung senkrecht zur Förderrichtung gemäß Pfeil 7.

Das Sieb 20 ist hier im Bereich der Wanne 10 dargestellt und angeordnet, wobei das Sieb 20 gleichsam einen Bestandteil dieser Wanne 10 bildet. Es ist jedoch auch möglich, das Sieb 20 an anderer Stelle anzuordnen, jedoch immer so, daß sämtliche der Temperierstation 2 zufließende oder zugeleitete Masse durch das Sieb 20 gesiebt wird.

### BEZUGSZEICHENLISTE

- 1 -: Maschine
- 2 -: Temperierstation
- 3 -: Überziehstation
- 4 -: Schleierkasten
- 5 -: Gebläse
- 6 -: Gitterband
- 7 -: Pfeil
- 8 -: Konsole
- 9 -: Warenstück
- 10 -: wanne

- 11 -: Pfeil
- 12 -: Förderstrecke
- 13 -: Reservoir
- 14 -: Wandung
- 15 -: Masse
- 16 -: Förderstrecke
- 17 -: Pumpe
- 18 -: Überlauf
- 19 -: Pfeil
- 20 -: Sieb

- 21 -: Seitenwandung
- 22 -: Siebfläche
- 23 -: Durchbrechung
- 24 -: Rand
- 25 -: Schwingantrieb
- 26 -: Doppelpfeil

## Patentansprüche

1. Kombinierte Temperier- und Überziehmaschine für kakaobutterhaltige oder ähnliche fetthaltige Massen, mit einer Temperierstation (2), einer insbesondere darüber angeordneten Überziehstation (3), einem durch die Überziehstation (3) geführten Gitterband (6) zur Aufnahme der Warenstücke (9), einer unter dem Gitterband (6) angeordneten Wanne (10) zum Auffangen und Zuleiten überschüssiger Masse zu der Temperierstation (2) und mit mindestens einer Förderstrecke (12, 16) für die flüssige Masse, **dadurch gekennzeichnet, daß** unterhalb des Gitterbandes (6) ein auch während der Produktion aus der Maschine (1) herausnehmbares Sieb (20) vorgesehen ist, welches so angeordnet ist, daß die zur Temperierstation (2) zurückfließende Masse durch das Sieb (20) geleitet wird.

2. Temperier- und Überziehmaschine nach Anspruch 1, **dadurch gekennzeichnet, daß** das herausnehmbare Sieb (20) im Bereich der Wanne (10) angeordnet ist.

3. Temperier- und Überziehmaschine nach Anspruch 1 oder 2, **dadurch gekennzeichnet, daß** das herausnehmbare Sieb (20) ein Stück Siebgewebe aufweist, welches Maschen mit einer Öffnungsweite von etwa 1,5 bis 3 mm besitzt.

4. Temperier- und Überziehmaschine nach Anspruch 1 oder 2, **dadurch gekennzeichnet, daß** unter dem Gitterband (6) ein einen Überlauf (18) aufweisendes Reservoir (13) für temperierte Masse vorgesehen ist, und daß das herausnehmbare Sieb (20) so angeordnet ist, daß es sowohl die aus dem Überlauf (18) des Reservoirs (13) austretende Masse als auch die von dem Reservoir nicht aufgefangene Masse der Überziehstation (3) auffängt.

5. Temperier- und Überziehmaschine nach Anspruch 1, **dadurch gekennzeichnet, daß** das herausnehmbare Sieb (20) kastenförmig mit umlaufender hochgezogener Seitenwandung (21) ausgebildet ist.

6. Temperier- und Überziehmaschine nach Anspruch 5, **dadurch gekennzeichnet, daß** das herausnehmbare Sieb (20) eine großflächige Durchbrechung (23) mit hochgezogenem Rand (24) aufweist.

7. Temperier- und Überziehmaschine nach einem der Ansprüche 1 bis 6, **dadurch gekennzeichnet, daß** das herausnehmbare Sieb (20) an der Maschine (1) schwingfähig gelagert ist und als Schwingsieb mit einem Schwingantrieb (25) versehen ist.

## Claims

1. A combined tempering and coating machine for masses containing cocoa butter or similar fat containing masses, including a tempering unit (2), a coating unit (3) especially being arranged above the tempering unit (2), a grid belt (6) for receiving the articles (9) and being guided through the coating unit (3), a tub (10) for collecting and directing surplus mass to the tempering unit (2) and being arranged below the grid belt (6) and at least one conveying path (12, 16) for the liquid mass, **characterized in that** a screen (20) is provided below the grid belt (6) to be also removable from the machine (1) during production, the screen (20) being arranged in a way that the mass flowing back to the tempering unit (2) is fed through the screen (20).

2. The tempering and coating machine of claim 1, **characterized in that** the removable screen (20) is arranged in the region of the tub (10).

3. The tempering and coating machine of claim 1 or 2, **characterized in that** the removable screen (20) includes a piece of screen texture including meshes having an opening width of approximately 1.5 to 3 mm.

4. The tempering and coating machine of claim 1 or 2, **characterized in that** a reservoir (13) for tempered mass including a overflow (18) is provided below the grid belt (6), and that the removable screen (20) is arranged in a way that it collects the mass exiting the overflow (18) of the reservoir (13) as well as the mass of the coating unit (3) that has not been collected by the reservoir.

5. The tempering and coating machine of claim 1, **characterized in that** the removable screen (20) is designed to be box-like including a continuous raised side wall (21).

6. The tempering and coating machine of claim 5, **characterized in that** the removable screen (20) includes a large-surface opening (23) having a raised rim (24).

7. The tempering and coating machine of one of claims 1 to 6, **characterized in that** the removable screen (20) is supported at the machine (1) to be capable of swinging, and as a swing screen it includes a swing drive (25).

## Revendications

1. Machine combinée de maintien en température et de couverture pour pâtes contenant du beurre de cacao ou pâtes grasses similaires, comportant un poste de maintien en température (2), un poste de couverture (3) disposé au-dessus, une bande à grille (6) passant à travers le poste de couverture (3), destinée à recevoir les produits (9), un bac (10) disposé sous la bande à grille (6) destiné à recueillir et à acheminer la pâte excédentaire vers le poste de maintien en température (2) et comportant au moins une distance de transport (12, 16) pour la pâte liquide, **caractérisée en ce qu'**au-dessous de la bande à grille (6) est prévu un tamis (20) qui peut être enlevé de la machine (1) même pendant la production et qui est disposé de manière que la pâte qui reflue vers le poste de maintien en température (2) soit acheminée à travers le tamis (20).

2. Machine de maintien en température et de couverture selon la revendication 1, **caractérisée en ce que** le tamis (20) extractible est disposé dans la zone du bac (10).

3. Machine de maintien en température et de couverture selon la revendication 1 ou 2, **caractérisée en ce que** le tamis (20) extractible comporte un morceau de tissu à tamis qui présente des mailles d'une ouverture d'environ 1,5 à 3 mm.

4. Machine de maintien en température et de couverture selon la revendication 1 ou 2, **caractérisée en ce qu'**au-dessous de la bande de grille (6) est prévu un réservoir (13) pour la pâte tempérée, qui comporte un trop-plein (18), et **en ce que** le tarnis (20) extractible est disposé de manière à recueillir aussi bien la pâte qui sort du trop-plein (18) du réservoir (13) que la pâte du poste de couverture (3) qui n'a pas été recueillie par le réservoir.

5. Machine de maintien en température et de couverture selon la revendication 1, **caractérisée en ce que** le tamis (20) extractible est en forme de caisson avec paroi latérale (21) périphérique relevée.

6. Machine de maintien en température et de couverture selon la revendication 5, **caractérisée en ce que** le tamis (20) extractible présente un ajour (23) de grande surface avec bord relevé (24).

7. Machine de maintien en température et de couverture selon l'une des revendications 1 à 6, **caractérisée en ce que** le tamis (20) extractible est monté oscillant sur la machine (1) et en tant que tamis oscillant il est pourvu d'un dispositif d'entraînement en oscillation (25).
